# EUROPEAN PATENT APPLICATION

(11) **EP 2 560 109 A1**
(43) Date of publication of application: **20.02.2013**
(21) Application number: 11835607.0
(22) Date of filing: 20.10.2011
(51) Int. Cl.: G06F 17/30

(54) **METHOD AND DEVICE FOR ASSOCIATING MEDIA FILES**

(30) Priority: 28.10.2010 CN 201010528589
(71) Applicant: Huawei Device Co., Ltd., Longgang District Shenzhen Guangdong 518129 (CN)
(72) Inventor: GAO, Wei, Shenzhen Guangdong 518129 (CN); YANG, Qinghua, Shenzhen Guangdong 518129 (CN); CAO, Huitao, Shenzhen Guangdong 518129 (CN); GENG, Xiaodong, Shenzhen Guangdong 518129 (CN); ZHANG, Mingwang, Shenzhen Guangdong 518129 (CN); DONG, Wencai, Shenzhen Guangdong 518129 (CN); LUO, Weiwei, Shenzhen Guangdong 518129 (CN)
(74) Representative: Goddar, Heinz J.
(86) International application number: PCT/CN2011/081066
(87) International publication number: WO 2012/055334

(57) **Abstract**

Embodiments of the present invention relate to the field of mobile communications, and disclose a method and a device for associating media files. The method includes: writing a second media file associated with a first media file and abstract information of the second media file into an association segment of the first media file, where the abstract information of the second media file is used to retrieve the first media file; and re-storing the first media file. With the present invention, complex file association management may be avoided.

Embodiments of the present invention relate to the field of mobile communications, and disclose a method and a device for associating media files. The method includes: writing a second media file associated with a first media file and abstract information of the second media file into an association segment of the first media file, where the abstract information of the second media file is used to retrieve the first media file; and re-storing the first media file. With the present invention, complex file association management may be avoided.

## Description

This application claims priority to Chinese Patent Application No. CN201010528589.4, filed with the Chinese Patent Office on October 28, 2010 and entitled "METHOD AND DEVICE FOR ASSOCIATING MEDIA FILES", which is incorporated herein by reference in its entirety.

### FIELD OF THE INVENTION

The present invention relates to the field of mobile communications, and in particular, to a method and a device for associating media files.

### BACKGROUND OF THE INVENTION

Currently, there is no association between locally stored voice files and photofiles. Voice files are associated with image files only in such applications as audio postcard (AudioPostcard) services and multimedia messaging services.

In the existing applications such as audio postcard services and multimedia messaging services, the association between voice files and image files is implemented by using a multimedia messaging service (Multimedia Messaging Service, MMS for short) mode. Specifically, a voice file is used as an attachment to an image file (or a word file) and packed with the image file (or the word file) to form an audio postcard service or a multimedia messaging service, and the audio postcard service or multimedia messaging service is sent to a terminal.

However, after being packed in the MMS mode, the voice file and the image file are still two physically independent files and stored separately. After the terminal downloads the audio postcard or the multimedia message locally, the association between the voice file and the image file does not exist without the audio postcard service or the multimedia messaging service.

### SUMMARY OF THE INVENTION

Embodiments of the present invention provide a method and a device for associating media files to implement mutual association between media files.

An embodiment of the present invention provides a method for associating media files, including:
writing a second media file associated with a first media file and abstract information of the second media file into an association segment of the first media file, where the abstract information of the second media file is used to retrieve the first media file; and
re-storing the first media file.

An embodiment of the present invention provides a method for associating media files, including:
an inserting module, configured to write a second media file associated with a first media file and abstract information of the second media file into an association segment of the first media file, where the abstract information of the second media file is used to retrieve the first media file; and
a storing module, configured to re-store the first media file.

By using the method and device for associating media files according to the embodiments of the present invention, the second media file associated with the first media file and the abstract information of the second media file are directly stored in the association segment in the first media file; the first media file can be retrieved according to the abstract information of the second media file in the association segment. In this way, the association between the first media file and the second media file is implemented. After an editing operation (for example, cutting, copying, or renaming) is performed on the first media, the first media file and abstract information thereof in the association segment are not lost, which may avoid complex file association management.

### BRIEF DESCRIPTION OF THE DRAWINGS

To illustrate the technical solutions according to the embodiments of the present invention or in the prior art more clearly, accompanying drawings required for describing the embodiments or the prior art are introduced briefly below. Apparently, the accompanying drawings in the following description are merely some embodiments of the present invention, and persons of ordinary skill in the art may further obtain other drawings according to the accompanying drawings without creative efforts.

FIG. 1 is a flowchart of a first embodiment of a method for associating media files according to the present invention;

FIG 2 is a flowchart of a second embodiment of a method for associating media files according to the present invention;

FIG. 3 is a flowchart of a third embodiment of a method for associating media files according to the present invention;

FIG. 4 is a schematic structural diagram of a first embodiment of a device for associating media files according to the present invention;

FIG. 5 is a schematic structural diagram of a second embodiment of a device for associating media files according to the present invention; and

FIG. 6 is a schematic structural diagram of a third embodiment of a device for associating media files according to the present invention.

### DETAILED DESCRIPTION OF THE EMBODIMENTS

In order to make the objectives, technical solutions, and advantages of the present invention clearer, the present invention is further described in detail in the following with reference to embodiments and accompanying drawings. Herein, the exemplary embodiments of the present invention and descriptions thereof are merely provided for explaining the present invention, instead of limiting the present invention.

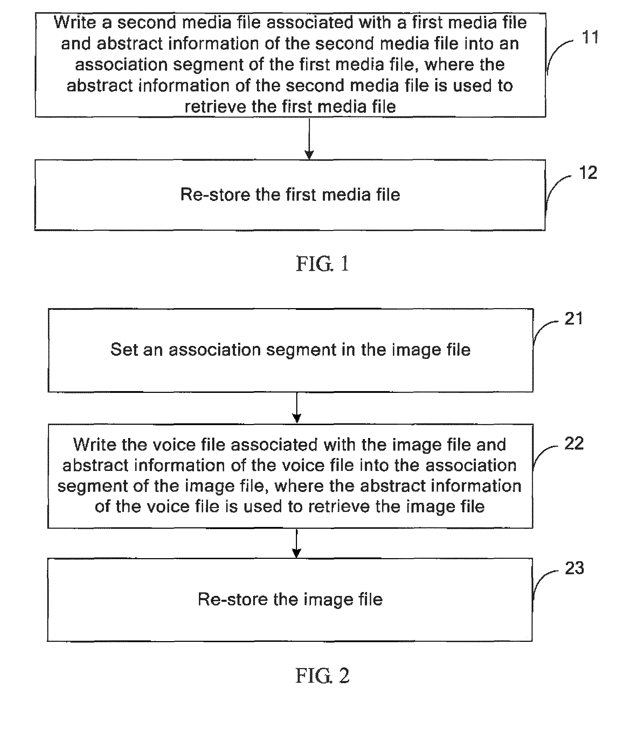

FIG. 1 is a flowchart of a first embodiment of a method for associating media files according to the present invention. As shown in FIG. 1, this embodiment includes:

Step 11: Write a second media file associated with a first media file and abstract information of the second media file into an association segment of the first media file, where the abstract information of the second media file may be used to retrieve the first media file.

An association segment may be preset in the first media file to store the second media file associated with the first media file and the abstract information of the second media file. The abstract information of the second media file is a sampled content extracted from the second media file and can uniquely identify the second media file.

The first media file may be an image file, and the second media file associated with the image file may be a voice file; or the first media file may be a voice file, and the second media le associated with the voice file may be an image file. The voice file may be a voice description of the photographing scene of the image file or be background music associated with the image file,

Step 12: Re-store the first media file.

After the second media file and the abstract information of the second media file are written into the association segment, the first media file is stored. By using the above association method, the second media file is written into the association segment of the first media file as a part of the first media file, and only one of the first media file and the second media file exists physically. Subsequently, the contents in the association segment may be modified, and the media file associated with the first media file is replaced with the modified second media file or another media file, or the abstract information of the second media file in the association segment may be modified. Similarly, when the first media file is edited, the second media file and abstract information thereof may also be edited by editing the contents in the association segment. When a user opens the first media file, the first media file and the second media file are played at the same time.

When the first media file is an image file and the second media file associated with the image file is a voice file, the image file after the association and combination is still stored in an original format, but includes a segment of audio source data. To play the image file and the voice file associated with the image file at the same time, when the image file is opened by using a picture viewer, the picture viewer may directly extract the voice file from the image file (for example, a specified field that stores a voice file header) and store the voice file in a buffer, and then send the voice file in the buffer to an underlying codec decoder for audio playing. By using the above method, when the user sees the opened image file on an interface, the audio associated with the image file is played in the background.

By using the method for associating media files in this embodiment, the second media file associated with the first media file and the abstract information of the second media file are directly stored in the association segment in the first media file; the first media file can be retrieved according to the abstract information of the second media file in the association segment. In this way, the association between the first media file and the second media file is implemented. After an editing operation (for example, cutting, copying, or renaming) is performed on the first media, the first media file and abstract information thereof in the association segment are not lost. Therefore, complex file association management may be avoided.

FIG. 2 is a flowchart of a second embodiment of a method for associating media files according to the present invention. This embodiment describes the technical solution of the method for associating media files according to the present invention by using a voice file and an image file as an example. As shown in FIG. 2, this embodiment includes:

Step 21: Set an association segment in the image file.

A reserved field in a file header of the image file may be used to record voice segment information associated with the image file. For example, for a JPEG file, a new segment may be added to store a voice file, where the segment may range from 1 to 65535. Therefore, if an AMR (Audio/Modem Riser) audio stream with a bit rate of 4.75 kbit/s is stored, a voice segment lasting 120 seconds may be stored. In addition, a field storing image resolution information or a field storing geographical coordinate information in the JPEG file may be used to store the voice file and abstract information thereof.

Step 22: Write the voice file associated with the image file and abstract information of the voice file into the association segment of the image file, where the abstract information of the voice file is used to retrieve the image file.

The abstract information of the voice file that can uniquely identify the voice file is extracted from the voice file, and the voice file and the abstract information of the voice file are written into the above set association segment.

Step 23: Re-store the image file.

When a voice file is selected to be associated with the image file, the voice file is written into the association segment of the image file, and the image file is re-stored. If the association between the image file and a voice segment needs to be broken, contents in the association segment may be cleared, and the image file is re-stored.

A user can search, by using an input voice segment, for an image file associated with the voice segment. For example, after the user inputs an audio stream segment by using a voice input function, data sampling may be performed on the audio stream to obtain abstract information; then the abstract information is matched, by using a search function, with an image file that stores the abstract information of the voice file, and a corresponding image file is retrieved. If the voice segment input by the user is fully consistent with the abstract information of the voice file associated with the image file, the image file may be matched; otherwise, fuzzy search may be implemented by using a fuzzy query feature of a database engine.

In this embodiment, the voice file associated with the image file is directly stored in the association segment of the image file, and therefore the association between the image file and the voice file is implemented. Even if such editing operations as copying, cutting, and renaming are performed on the image file, the voice file in the association segment will not be lost, thereby avoiding complex file association management.

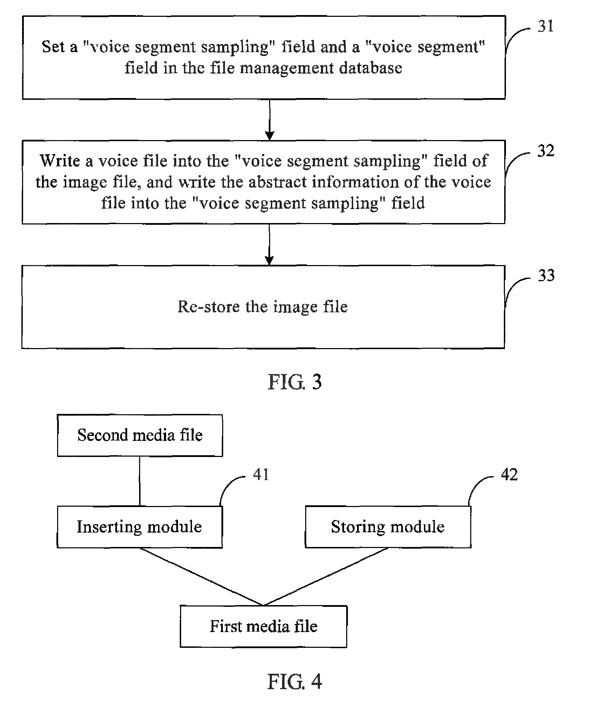

FIG 3 is a flowchart of a third embodiment of a method for associating media files according to the present invention. This embodiment describes the technical solution of the method for associating media files by using an image file in a file management database as an example. As shown in FIG. 3, this embodiment includes:

Step 31: Set a "voice segment sampling" field and a "voice segment" field in the file management database.

The file management database generally includes file basic information such as file name, file type, file size, date of creation, and date of modification, and media file specific properties such as musician and album. If the "voice segment sampling" field is added to the database, the association between the image file and the voice segment may be managed.

Step 32: Write a voice file into the "voice segment" field of the image file, and write the abstract information of the voice file into the "voice segment sampling" field.

In the file management database, the voice file associated with the image file and abstract information of the voice file are recorded, where the abstract information may be a data sample of the voice file and can uniquely identify the voice file. Preferably, to save storage space, the voice file may be a voice segment.

When a current image file is selected to be associated with a voice segment, the "voice segment sampling" field of the image file is updated in the database, and the abstract information of the corresponding voice segment is filled in the field. After the association between the current image file and a voice segment is broken, the "voice segment sampling" field of the image file is updated in the database, and the abstract information of the corresponding voice segment is deleted.

Step 33: Re-store the image file.

This implementation solution has the following merits: After a user inputs an audio stream segment by using a voice input function, data sampling may be performed on the audio stream segment to obtain the abstract information; and then the abstract information is matched with the stored "voice segment sampling" field by using the query function of the database, and a corresponding photo file can be found quickly.

FIG 4 is a schematic structural diagram of a first embodiment of a device for associating media files according to the present invention. As shown in FIG. 4, the device includes an inserting module 41 and a storing module 42.

The inserting module 41 is configured to write a second media file associated with a first media file and abstract information of the second media file into an association segment of the first media file, where the abstract information of the second media file is used to retrieve the first media file.

The storing module 42 is configured to re-store the first media file.

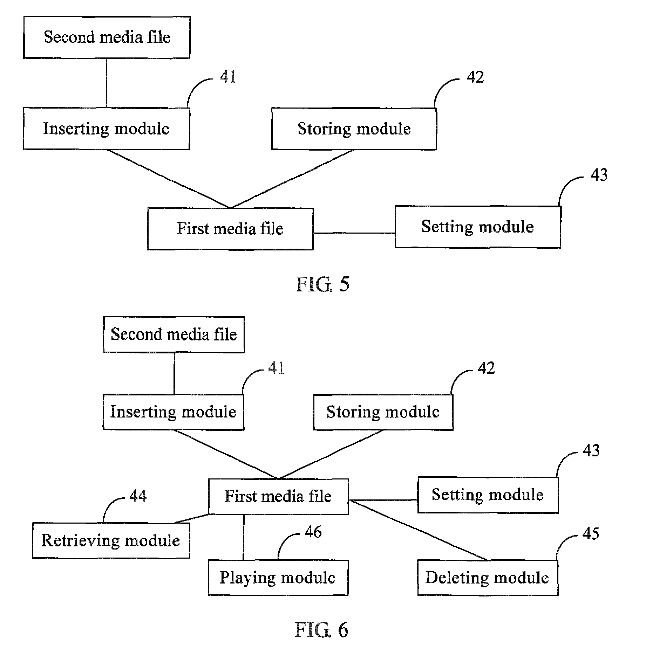

As shown in FIG. 5, the above technical solution further includes a setting module 43.

The setting module is configured to set an association segment in the first media file.

The working principles of the above modules are disclosed in the descriptions of the embodiments shown in FIG. 1, FIG. 2, and FIG. 3, and are not further described herein.

By using the device for associating media files in this embodiment, the inserting module 41 directly inserts the second media file associated with the first media file and abstract information of the second media file into the association segment that the setting module 43 sets in the first media file. The first media file may be retrieved according to the abstract information of the second media file in the association segment, and therefore the association between the first media file and the second media file is implemented. After an editing operation (for example, cutting, copying, or renaming) is performed on the first media, the first media file and abstract information thereof in the association segment are not lost. Therefore, complex file association management may be avoided.

To perform such operations as retrieval and modification on the first media file, as shown in FIG. 6, on the basis of the above solution, the device further includes a retrieving module 44, a deleting module 45, and a playing module 46.

The retrieving module 44 is configured to retrieve the first media file according to the abstract information of the second media file stored in the association segment of the first media file.

The deleting module 45 is configured to delete contents in the association segment in the first media file.

The storing module 42 is further configured to: after the contents in the association segment in the first media file are deleted, re-store the first media file.

The playing module 46 is configured to: when playing the first media file, play the second media file.

The retrieving module 44 may retrieve the first media file according to the abstract information of the second media file stored in the association segment of the first media file. The playing module 46 may play the second media file when playing the first media file. After the deleting module 45 deletes the contents in the association segment in the first media file, the storing module 42 re-stores the first media file.

By using the device for associating media files in this embodiment, after an editing operation is performed on the first media file, the first media file and abstract information thereof in the association segment will not be lost, which may avoid complex file association management. In addition, the first media file may be retrieved according to the abstract information of the second media file stored in the first media file; when the first media file is an image file and the second media file is a voice file, the associated image file may be retrieved according to the voice information; and the voice file may be played when the image file is opened and played. Therefore, this embodiment enables users to use image files easily, and meets requirements of the users for associating media files.

Through descriptions about the method in the preceding embodiments, a person skilled in the art may clearly understand that the present invention may be implemented through software by combining a necessary general hardware platform, or through hardware. In most cases, however, the former is a preferred implementation mode. Based on this, the technical solutions of the present invention or the part that makes contributions to the prior art can be substantially embodied in the form of a software product. The computer software product is stored in a readable storage medium, for example, a floppy disk, hard disk, or optical disk of the computer, and contains several instructions used to instruct computer equipment (for example, a personal computer, a server, or network equipment) to perform the methods according to the embodiments of the present invention.

The objectives, technical solutions, and benefits of the embodiments of the present invention are described in detail above. Although the present invention is described in detail with reference to some embodiments, those embodiments are not intended to limit the protection scope of the present invention. Any modification, equivalent replacement, or improvement made to the embodiments of the present invention without departing from the spirit and principles of the present invention shall fall into the protection scope of the present invention.

## Claims

1. A method for associating media files, comprising:
writing a second media file associated with a first media file and abstract information of the second media file into an association segment of the first media file, wherein the abstract information of the second media file is used to retrieve the first media file; and
re-storing the first media file.

2. The method for associating media files according to claim 1, wherein before writing a second media file associated with a first media file and abstract information of the second media file into an association segment of the first media file, the method further comprises:
setting the association segment in the first media file.

3. The method for associating media files according to claim 2, wherein after re-storing the first media file, the method further comprises:
retrieving the first media file according to the abstract information of the second media file stored in the association segment of the first media file.

4. The method for associating media files according to claim 3, wherein after re-storing the first media file, the method further comprises:
when playing the first media file, playing the second media file.

5. The method for associating media files according to any one of claims 1 to 4, wherein the first media file is a voice file, and the second media file is an image file; or the first media file is an image file and the second media file is a voice file.

6. A device for associating media files, comprising:
an inserting module, configured to write a second media file associated with a first media file and abstract information of the second media file into an association segment of the first media file, wherein the abstract information of the second media file is used to retrieve the first media file; and
a storing module, configured to re-store the first media file.

7. The device for associating media files according to claim 6, further comprising:
a setting module, configured to set the association segment in the first media file.

8. The device for associating media files according to claim 7, further comprising:
a retrieving module, configured to retrieve the first media file according to the abstract information of the second media file stored in the association segment of the first media file.

9. The device for associating media files according to claim 8, further comprising:
a deleting module, configured to delete contents in the association segment in the first media file, wherein
the storing module is further configured to: after the contents in the association segment in the first media file are deleted, re-store the first media file.

10. The device for associating media files according to claim 9, further comprising:
a playing module, configured to: when playing the first media file, play the second media file.
